(19) Europäisches Patentamt
European Patent Office
Office européen des brevets

(11) **EP 4 227 843 A1**

(12) **EUROPEAN PATENT APPLICATION**

(43) Date of publication:
**16.08.2023 Bulletin 2023/33**

(21) Application number: **22155758.0**

(22) Date of filing: **09.02.2022**

(51) International Patent Classification (IPC):
**G06F 21/71** $^{(2013.01)}$     **G06F 11/22** $^{(2006.01)}$
**G06F 30/33** $^{(2020.01)}$     **G06F 21/55** $^{(2013.01)}$

(52) Cooperative Patent Classification (CPC):
**G06F 21/71; G06F 11/22; G06F 21/556;
G06F 30/33**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ETH Zurich
8092 Zurich (CH)**

(72) Inventors:
• **RAZAVI, Kaveh
  8006 Zürich (CH)**
• **SOLT, Flavien
  8046 Zürich (CH)**

(54) **HARDWARE INFORMATION FLOW TRACKING**

(57)     The present invention relates to a method for constructing an Information Flow Tracking (IFT) shadow logic $C^t$ (1',6,7) for a combinational macro-cell C (1) on a register-transfer level and to the constructed IFT shadow logic. The present invention further relates to a method for instrumenting a hardware design with IFT shadow logic and to a method for testing a hardware design.

*Fig. 3*

**EP 4 227 843 A1**

**Description**

**Field of the invention**

The present invention relates to a method for constructing an Information Flow Tracking (IFT) shadow logic $C^t$ for a combinational macro-cell C on a register-transfer level and to the constructed IFT shadow logic. The present invention further relates to a method for instrumenting a hardware design with IFT shadow logic and to a method for testing a hardware design.

**Background to the invention**

Hardware design flaws are commonly encountered in modern hardware designs due to high complexity of said hardware designs, potentially leading to security flaws which can be exploited from software. Post-silicon, it is often difficult to mitigate such vulnerabilities; it is therefore preferential to capture such vulnerabilities already during the design phase of the hardware. Current tools and techniques used during Electronic Design Automation are, however, not capable of capturing such security vulnerabilities in large hardware designs.

From prior art, Information Flow Tracking (IFT) is known as an approach that can be used for analysing a hardware design. Information may be considered to flow from a source to a sink if changes in the value of the source can influence the value of the sink. As security properties, confidentiality and integrity can be modelled using IFT approaches: 1) if the source comprises secret information and the sink can be observed by an attacker, no information should flow from the source to the sink; 2) if the source comprises untrusted information and the sink comprises trusted information, an attacker should not be able to access the sink by influencing the source, i.e., no information should flow from the source to the sink. In IFT, therefore, to test whether information flows from a sink to a source, signals in the source can be augmented with corresponding taint signals, and in parallel to computations performed on the signals in the source (and to intermediate signals derived by processing the source signals), corresponding operations on the taint signals can be introduced to track the propagation of the taint signals: if the computations performed lead to tainted signals in the sink, for example, IFT indicates that information has flowed from the source to the sink.

IFT was originally introduced in the software domain and was only later extended to the field of hardware. In Denning, Dorothy E., and Peter J. Denning. "Certification of programs for secure information flow." Communications of the ACM 20.7 (1977): 504-513, for example, a lattice model was introduced for describing allowed information flow between different security classes. Denning and Denning showed that the general security requirement "Information flows from an object $x$ to an object $y$ for some execution of programme $p$ only if the underlying lattice model comprises a permissible flow from the security class of object $x$ to the security class of object y" is generally undecidable by reverting to the well-known halting problem. Hence, for a programme $p$ it can only be ascertained whether said programme adheres to weaker security requirements. Such weaker security requirements are, however, inherently less precise, and programmes may be falsely labelled as insecure which would be safe according to the general security requirement.

For hardware IFT, different levels of abstraction of hardware can be considered. In Tiwari, Mohit, et al. "Complete information flow tracking from the gates up." Proceedings of the 14th international conference on architectural support for programming languages and operating systems. 2009, for example, logical gates at the gate level of abstraction were instrumented to additionally perform taint propagation. Since typically only a low number of different logical gate types is encountered in a gate-level netlist of a hardware design, it is possible to achieve completeness in instrumentation as for all encountered logical gates a IFT taint propagation logic may be available. Gate-level instrumentation of a hardware design, however, lacks precision. While it is possible to precisely model taint propagation for individual logical gates, interaction between logical gates leads to an overestimation of propagated taint. Furthermore, instrumenting at the gate level leads to scalability problems due to the sheer number of individual logical gates in a large hardware design. In Ardeshiricham, Armaiti, et al. "Register transfer level information flow tracking for provably secure hardware design." Design, Automation & Test in Europe Conference & Exhibition (DATE), 2017. IEEE, 2017, therefore, instrumentation was proposed on the register-transfer level: synthesisable hardware-description language (HDL) code on the register-transfer level would be transformed using flow tracking libraries into functionally equivalent HDL code instrumented with IFT tracking logic. On the level of abstraction considered by Ardeshiricham et al., the datapath and the control path are still separate, and both explicit flows and implicit flows need to be tracked. While it is possible to achieve precision and scalability following this latter approach, since existing HDLs are complex, it is challenging to achieve completeness following the approach of Ardeshiricham et al.

It is an object of the present invention to mitigate at least some of the disadvantages associated with hardware information flow tracking as known from the prior art; in particular it is an object of the present invention to provide IFT instrumentation which is precise, scalable and complete.

## Summary of the invention

According to a first aspect of the present invention, there is provided a method for constructing an Information Flow Tracking (IFT) shadow logic $C^t$ for a combinational macro-cell C on a register-transfer level, involving the steps recited in claim 1. Further features and embodiments of the method according to the first aspect of the present invention are described in the dependent patent claims.

The invention relates to a method for constructing an Information Flow Tracking (IFT) shadow logic $C^t$ for a combinational macro-cell C on a register-transfer level, wherein the combinational macro-cell C is configured to receive as input a set of input bits $I$ comprising $N_i$ elements, to which $N_i$ input bits $I$ correspond $N_i$ taint input bits $I^t$, and to provide as output a set of output bits $C(I)$ comprising $N_o$ elements, wherein the IFT shadow logic is configured to map the set of input bits and the corresponding set of taint input bits onto a set of $N_o$ taint output bits corresponding to the $N_o$ output bits, and wherein the constructing of the IFT shadow logic comprises as steps: (a) constructing at least one replica of the combinational macro-cell C; (b) constructing an input logic, wherein the input logic is configured to provide input to the at least one replica of the combinational macro-cell C, and wherein the input logic is configured to receive as input the $N_i$ input bits $I$ and the $N_i$ taint input bits $I^t$; and (c) constructing an additional logic configured to at least receive input from the at least one replica of the combination macro-cell C, wherein the additional logic is configured to provide the $N_o$ taint output bits corresponding to the $N_o$ output bits of the combinational macro-cell C. The constructed IFT shadow logic $C^t$ comprises the input logic, the at least one replica of the combinational macro-cell C, and the additional logic.

The at least one replica of the combinational macro-cell, the input logic and the additional logic are all synthesisable. The IFT shadow logic $C^t$ may therefore be synthesised into a gate netlist, for example. Since an instrumented macro-cell (macro-cell plus corresponding IFT shadow logic) is synthesisable, it is amenable to FPGA acceleration or ASIC (application-specific integrated circuit) fabrication.

In an embodiment of the method according to the first aspect of the present invention, $2^{N_i}$ replicas of the combinational macro-cell C are constructed, and the constructed input logic comprises $2^{N_i}$ multiplexer logic elements of the form $(I \wedge \overline{I^t}) \vee (v \wedge I^t)$, with $v$ having $N_i$ elements and being in binary representation, in particular unsigned binary representation, wherein each multiplexer logic element corresponds to a value assignment to $v$, and wherein the $2^{N_i}$ multiplexer logic elements are configured to provide input to the $2^{N_i}$ replicas of the combinational macro-cell C in a bijective manner, with each of the $2^{N_i}$ multiplexer logic elements being configured to provide an input to one corresponding replica of the combinational macro-cell C and with each of the $2^{N_i}$ replicas of the combinational macro-cell C being configured to receive an input from one corresponding multiplexer logic element, and the constructed additional logic comprises

$$N_o \binom{2^{N_i}}{2}$$

exclusive-or (XOR) logical gates and $N_o$ or (OR) logical gates, wherein each output bit position of an output bit in the output bits $C(I)$ of the combinational macro-cell C is replicated $2^{N_i}$ times in the $2^{N_i}$ replicas of the combinational macro-cell C, an wherein for each of the $N_o$ output bit positions, $\binom{2^{N_i}}{2}$ XOR logical gates are configured to carry out all possible bitwise XOR-operations between the $2^{N_i}$ bits at the respective output bit position, and wherein for each output bit position, an OR logical gate is configured to carry out an OR-operation between the $\binom{2^{N_i}}{2}$ outputs of the XOR logical gates corresponding to respective output bit position, and wherein the $N_o$ OR logical gates are configured to provide the $N_o$ taint output bits.

In a further embodiment of the method according to the first aspect of the present invention, the combinational macro-cell C is embodied as a monotonic macro-cell, wherein two replicas of the combinational macro-cell C are constructed, and wherein the constructed input logic comprises two multiplexer logic elements, wherein a first of the two multiplexer logic elements is embodied as $(I \wedge \overline{I^t}) \vee (d_{N_i-1} \ldots d_0 \wedge I^t)$ and is configured to provide an input to a first of the two replicas of the combinational macro-cell C, with $d_i := 1$ if the combinational macro-cell C is non-decreasing in input bit i or $d_i := 0$ if the combinational macro-cell C is non-increasing in input bit i, and wherein a second of the two multiplexer logic elements is embodied as $(I \wedge \overline{I^t}) \vee (\overline{d_{N_i}} \ldots \overline{d_0} \wedge I^t)$ and is configured to provide an input to a second of the two replicas of the combinational macro-cell C, and wherein the constructed additional logic comprises an XOR logical gate configured to provide the $N_o$ taint output bits, wherein the XOR logical gate is configured to carry out bitwise XOR-operations between corresponding elements in the outputs of the two replicas of the combinational macro-cell C.

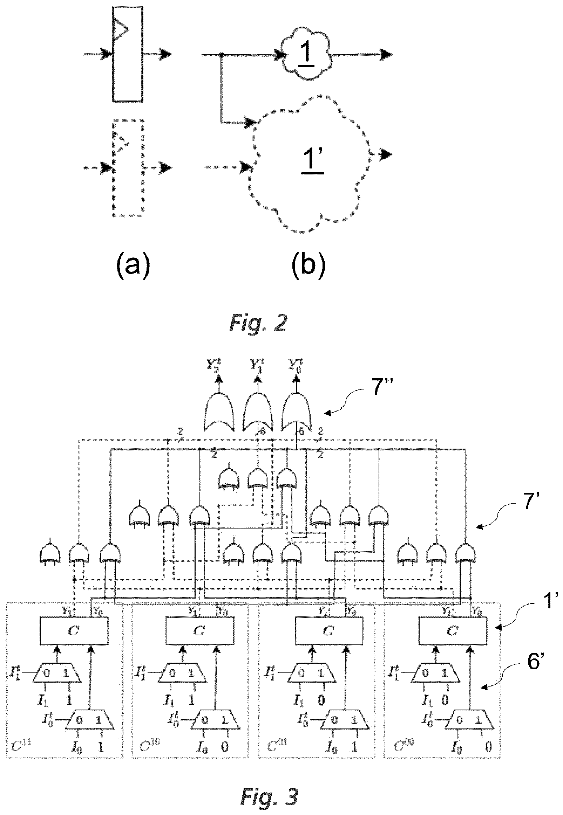

Three monotonicity properties may be defined: 1) *bitwise non-decreasing*; a (macro-)cell is bitwise non-decreasing in input offset *j* if no output bit of the (macro-)cell can fall from 1 to 0 when $I_j$ is raised from 0 to 1; 2) *bitwise non-increasing*; a (macro-)cell is bitwise non-increasing in input offset *j* if no output bit of the (macro-)cell can raise from 0 to 1 when $I_j$ is raised from 0 to 1; and 3) *bitwise monotonic*; a (macro-)cell is monotonic if with respect to each of its input bits, the (macro-)cell is non-decreasing or non-increasing. Examples of monotonic macro-cells are comparison operators, some logical reductions (e.g., multi-bit OR cells), inverter cells etc. Using notation introduced in the description of **Fig. 2** below, a IFT shadow logic for a reduction macro-cell, for example, can be concisely expressed as $Y^t = C^{0...0} \oplus C^{1...1}$, with both zeros and ones appearing $N_i$ times.

In a further embodiment of the method according to the first aspect of the present invention, the combinational macro-cell C is embodied as an adder macro-cell, wherein the $N_i$ input bits *I* comprise two inputs *A* and *B* each of width $N_i/2$ and wherein the $N_i$ taint input bits $I^t$ comprise two inputs $A^t$ and $B^t$ each of width $N_i/2$, and wherein two replicas of the combinational macro-cell C are constructed, and wherein the constructed input logic comprises two multiplexer logic elements, wherein a first of the two multiplexer logic elements is embodied as

$$\left( I \wedge \overline{I^t} \right) \vee \left( \underbrace{0 \dots 0}_{N_i - times} \wedge I^t \right),$$

with the first $N_i/2$ zeros corresponding to input *A* and the remaining $N_i/2$ zeros corresponding to input *B*, and with the output of the first multiplexer logic element configured to provide an input to a first of the two replicas of the adder macro-cell C, and wherein a second of the two multiplexer logic elements is embodied as

$$\left( I \wedge \overline{I^t} \right) \vee \left( \underbrace{1 \dots 1}_{N_i - times} \wedge I^t \right),$$

with the first $N_i/2$ ones corresponding to input *A* and the remaining $N_i/2$ ones corresponding to input *B*, and with the output of the second multiplexer logic element configured to provide an input to a second of the two replicas of the adder macro-cell C, and wherein the constructed additional logic comprises an XOR logical gate and two OR logical gates, wherein the XOR logical gate is configured to carry out bitwise XOR-operations between corresponding elements in the outputs of the two replicas of the adder macro-cell C, and wherein a first OR logical gate of the two OR logical gates is configured to carry out bitwise OR-operations between corresponding elements of $A^t$ and $B^t$, and wherein a second OR logical gate of the two OR logical gates is configured to carry out bitwise OR-operations between corresponding elements of the output of the XOR logical gate and the output of the first OR logical gate, wherein the second OR logical gate is configured to provide $N_i/2$ taint output bits.

In a further embodiment of the method according to the first aspect of the present invention, the combinational macro-cell C is embodied as a subtractor macro-cell, wherein the $N_i$ input bits *I* comprise two inputs *A* and *B* each of width $N_i/2$ and wherein the $N_i$ taint input bits $I^t$ comprise two inputs $A^t$ and $B^t$ each of width $N_i/2$, and wherein two replicas of the combinational macro-cell C are constructed, and wherein the constructed input logic comprises two multiplexer logic elements, wherein a first of the two multiplexer logic elements is embodied as

$$\left( I \wedge \overline{I^t} \right) \vee \left( 0 \dots 0 1 \dots 1 \wedge I^t \right)$$

with the first $N_i/2$ zeros corresponding to input *A* and the remaining $N_i/2$ ones corresponding to input *B*, and with the output of the first multiplexer logic element configured to provide an input to a first of the two replicas of the subtractor macro-cell C, and wherein a second of the two multiplexer logic elements is embodied as

$$\left( I \wedge \overline{I^t} \right) \vee \left( 1 \dots 1 0 \dots 0 \wedge I^t \right)$$

with the first $N_i/2$ ones corresponding to input *A* and the remaining $N_i/2$ zeros corresponding to input *B*, and with the output of the second multiplexer logic element configured to provide an input to a second of the two replicas of the subtractor macro-cell $C$, and wherein the constructed additional logic comprises an XOR logical gate and two OR logical gates, wherein the XOR logical gate is configured to carry out bitwise XOR-operations between corresponding elements in the outputs of the two replicas of the subtractor macro-cell $C$, and wherein a first OR logical gate of the two OR logical gates is configured to carry out bitwise OR-operations between corresponding elements of $A^t$ and $B^t$, and wherein a second OR logical gate of the two OR logical gates is configured to carry out bitwise OR-operations between corresponding elements of the output of the XOR logical gate and the output of the first OR logical gate, wherein the second OR logical gate is configured to provide $N_i/2$ taint output bits.

In a further embodiment of the method according to the first aspect of the present invention, the XOR logical gate is configured to provide taint output bits for carry bits. Carry bits may be part of a carry bit sequence used in an implementation of the adder macro-cell or of the subtractor macro-cell.

In a further embodiment of the method according to the first aspect of the present invention, the combinational macro-cell C is embodied as a negation macro-cell, and two replicas of the combinational macro-cell C are constructed, and the constructed input logic comprises two multiplexer logic elements, wherein a first of the two multiplexer logic elements is embodied as

$$\left( I \wedge \overline{I^t} \right) \vee \left( \underbrace{0 \ldots 0}_{N_i - times} \wedge I^t \right),$$

with the output of the first multiplexer logic element configured to provide an input to a first of the two replicas of the negation macro-cell C, and wherein a second of the two multiplexer logic elements is embodied as

$$\left( I \wedge \overline{I^t} \right) \vee \left( \underbrace{1 \ldots 1}_{N_i - times} \wedge I^t \right),$$

with the output of the second multiplexer logic element configured to provide an input to a second of the two replicas of the negation macro-cell C, and wherein the constructed additional logic comprises an XOR logical gate and an OR logical gate, wherein the XOR logical gate is configured to carry out bitwise XOR-operations between corresponding elements in the outputs of the two replicas of the negation macro-cell C, and wherein the OR logical gate is configured to carry out bitwise OR-operations between corresponding elements of the output of the XOR logical gate and the taint input bits $I^t$, wherein the OR logical gate is configured to provide the taint output bits.

A negation macro-cell can be defined as $Y = \overline{I} + 1$. Using the notation introduced in the description of **Fig. 2**, IFT shadow logic for a negation macro-cell can be concisely expressed as follows: $Y^t = C^{0\ldots0} \oplus C^{1\ldots1} \vee I^t$.

In a further embodiment of the method according to the first aspect of the present invention, the combinational macro-cell C is embodied as an (in)equality macro-cell, wherein the $N_i$ input bits $I$ comprise two inputs $A$ and $B$ each of width $N_i/2$ and wherein the $N_i$ taint input bits $I^t$ comprise two inputs $A^t$ and $B^t$ each of width $N_i/2$, and wherein one replica of the combinational macro-cell C is constructed, and wherein the constructed input logic is configured to determine $A \wedge \overline{A^t \vee B^t}$ and $B \wedge \overline{A^t \vee B^t}$ as input to the one replica of the (in)equality macro-cell C, and wherein the constructed additional logic comprises an AND logical gate and a term $\vee I^t$, which term is one if an only if any of the input bits is tainted, wherein the AND logical gate is configured to carry out an AND-operation between the output of the one replica of the (in)equality macro-cell C and the term $\vee I^t$, wherein the AND logical gate is configured to provide one taint output bit.

Using the notation introduced in the description of **Fig. 2** below, IFT shadow logic for an (in)equality macro-cell can be concisely expressed as follows: $Y^t = C(A \wedge \overline{A^t \vee B^t}; B \wedge \overline{A^t \vee B^t}) \wedge (\vee I^t)$.

In a further embodiment to the method according to the first aspect of the present invention, the combinational macro-cell C is embodied as a logical unsigned-offset shift macro-cell, wherein the $N_i$ input bits $I$ comprise two inputs $A$ and $B$ of width $N_A$ and $N_B$, respectively, and wherein the $N_i$ taint input bits $I^t$ comprise two inputs $A^t$ and $B^t$ of width $N_A$ and $N_B$, respectively, and wherein one replica of the combinational macro-cell C is constructed, and wherein the constructed input logic is configured to determine $B \wedge \overline{B^t}$ and to provide $A^t$ and $B \wedge \overline{B^t}$ as input to the one replica of the logical unsigned-offset shift macro-cell C which one replica is configured to evaluate $C(A^t, B \wedge \overline{B^t})$ and to provide $A'$ as output, and wherein the constructed additional logic is embodied as follows

$$Y_j^t = \bigvee_{k=0}^{2^{N_B}-1} \left( [B =_t k] \wedge \left[ A'_j \neq_t A'_{j+k} \right] \right),$$

with $k$ being in unsigned binary representation in term $[B =_t k]$, with $=_t$ denoting that two vectors match on non-tainted bits and $A'_j \neq_t A'_{j+k}$ corresponding to $\left( A'_j \oplus A'_{j+k} \right) \vee \left( A'^t_j \vee A'^t_{j+k} \right)$, and with $A'$ being completed with zeros beyond its most significant bit, and with $Y_j^t$ being the taint output bit corresponding to the j-th output bit which the logical unsigned-offset shift macro-cell C is configured to provide. Each constant vector $k$ may be considered to have a corresponding zero taint vector.

In a further embodiment of the method according to the first aspect of the present invention, the combinational macro-cell C is embodied as an arithmetical unsigned-offset shift macro-cell, wherein the $N_i$ input bits $I$ comprise two inputs $A$ and $B$ of width $N_A$ and $N_B$, respectively, and wherein the $N_i$ taint input bits $I^t$ comprise two inputs $A^t$ and $B^t$ of width $N_A$ and $N_B$, respectively, and wherein one replica of the combinational macro-cell C is constructed, and wherein the constructed input logic is configured to determine $B \wedge \overline{B^t}$ and to provide $A^t$ and $B \wedge \overline{B^t}$ as input to the one replica of the arithmetical unsigned-offset shift macro-cell C which one replica is configured to evaluate $C(A^t, B \wedge \overline{B^t})$ and to provide $A'$ as output, and wherein the constructed additional logic is embodied as follows

$$Y_j^t = \bigvee_{k=0}^{2^{N_B}-1} \left( [B =_t k] \wedge \left[ A'_j \neq_t A'_{\min (j+k,N_A-1)} \right] \right),$$

with $k$ being in unsigned binary representation in term $[B =_t k]$, with $=_t$ denoting that two vectors match on non-tainted bits and $A'_j \neq_t A'_{\min (j+k,N_A-1)}$ corresponding to $\left( A'_j \oplus A'_{\min (j+k,N_A-1)} \right) \vee \left( A'^t_j \vee A'^t_{\min (j+k,N_A-1)} \right)$, with min $(\cdot,\cdot)$ determining a smaller argument of its two arguments, and with $Y_j^t$ being the taint output bit corresponding to the j-th output bit which the arithmetical unsigned-offset shift macro-cell C is configured to provide. $A'$ may therefore be considered to be completed with values equal to its most significant bit $A'_{N_A-1}$ beyond its most significant bit.

Both logical unsigned-offset shift macro-cells and arithmetical unsigned-offset shift macro-cells are examples of translatable cells. A two-input cell (macro-cell) C may be said to be right side translatable (over addition) if it satisfies the following relationship for all inputs $A$ and $B$:

$$C(A, B' + B'') = C(C(A, B'), B'').$$

A left shift by an unsigned offset is, for example, right side translatable: $A \ll (B' + B'') = (A \ll B') \ll B''$. Since the following decomposition holds: $B = B^0 + B \wedge B^t$, with $B^0 := B \wedge \overline{B^t}$ ($B^0$ therefore corresponds to a $B$ in which all tainted bits are set to zero), right side translatability can be used to obtain the following relationship:

$$C(A, B) = C(A, B^0 + B \wedge B^t) = C(C(A, B^0), B \wedge B^t).$$

The latter relationship forms the basis for IFT shadow logic construction for translatable macro-cells, and is used for IFT shadow logic construction for both the logical unsigned-offset shift cell and the arithmetical unsigned-offset shift cell.

According to a second aspect of the present invention, there is provided an Information Flow Tracking (IFT) shadow logic $C^t$ corresponding to a combinational macro-cell C on a register-transfer level, wherein the IFT shadow logic is constructed using a method according to the first aspect of the present invention.

According to a third aspect of the present invention, there is provided a method for instrumenting a hardware design on a register-transfer level with IFT shadow logic, wherein the hardware design comprises at least one combinational macro-cell, wherein the method comprises constructing an IFT shadow logic for each combinational macro-cell of the at least one combinational macro-cell using the method according to the first aspect of the present invention and instrumenting the respective combinational macro-cell with the constructed IFT shadow logic.

The hardware design may, for example, be available in the form of a register-transfer level netlist comprising combinational macro-cells and state-holding macro-cells. The register-transfer level netlist may comprise information on the connections between elements in the netlist. The IFT shadow logic corresponding to a combinational macro-cell may then, for example, be connected to IFT shadow logic of another instrumented combinational macro-cell, which, according to the register-transfer level netlist, is connected to the combinational macro-cell, and the IFT shadow logic corresponding to a combinational macro-cell may be connected to another combinational macro-cell, which, according to the register-transfer level netlist, is connected to the combinational macro-cell. The method according to the third aspect of the present invention may therefore proceed by processing elements of the register-transfer level netlist.

In an embodiment of the method according to the third aspect of the present invention, the hardware design corresponds to a general-purpose central processing unit, and/or the hardware design corresponds to a system on a chip (SoC).

Since the IFT shadow logic construction mechanism for combinational macro-cells is complete, precise, and scalable, large hardware designs such as a full SoC can be instrumented with taint propagation logic.

According to a fourth aspect of the present invention, there is provided a computer program product comprising instructions which when executed by a computer, cause the computer to carry out a method according to the third aspect of the present invention. Instrumenting a whole hardware design with taint propagation logic may be fully automatic. Existing hardware designs may be automatically instrumented with IFT shadow logic using the computer program product according to the fourth aspect of the present invention.

According to a fifth aspect of the present invention, there is provided a method for testing a hardware design on a register-transfer level, wherein the hardware design comprises at least one combinational macro-cell and a memory model, and which hardware design is instrumented with IFT shadow logic using the method according to the third aspect of the present invention, wherein the testing comprises as steps: (a) tainting at least one bit in the memory model, which at least one bit corresponds to program code or data stored in the memory model; (b) simulating execution of the instrumented hardware design using a register-transfer level simulator; and (c) testing the hardware design based on a propagation of taint, with taint propagating from the tainted at least one bit in the memory model to further components of the hardware design during the simulated execution.

Macro-cells are typically similar to native operations (specified by an instruction set architecture) of a central processing unit (CPU) on which simulation may proceed. Macro-cell behaviour may therefore be efficiently simulated on a CPU, in contrast to simulation performed on the gate level abstraction level of a digital circuit.

A hardware design may be tested, for example, for microarchitectural leakage. It is, for example, known that changes made to a microarchitectural state from secret-dependent datapaths or control paths can be exploited to leak secret data. To detect such microarchitectural leakage, a memory load of some tainted data in memory can be executed via simulation, and the taint propagation in the hardware design can be followed with cycle accuracy. This way, exact knowledge of which bit of the hardware design is tainted at what time can be obtained.

A hardware design may also be tested, for example, for meltdown-type vulnerabilities. In short, this class of vulnerabilities allows an invalid load to transiently access data from a different (higher) privilege level. By instrumenting the hardware design using IFT shadow logic, loads can be detected which access data from a higher privilege level, e.g., by tainting bits in memory corresponding to data from the higher privilege level and testing in which way these tainted bits propagate.

A hardware design may also be tested, for example, for architectural vulnerabilities based on macro-cell instrumentation with taint propagation logic. Examples of architectural vulnerabilities are address space violations, reachability violations, reset violations and privilege violations.

## Brief description of drawings

Exemplar embodiments of the invention are disclosed in the description and illustrated by the drawings in which:

Fig. 1 schematically illustrates a representation of a constructed IFT shadow logic using the method according to the first aspect of the invention, and shows a schematic flow chart of the method according to the first aspect of the invention;

Fig. 2 schematically illustrates construction principles used for instrumenting a hardware design with IFT shadow logic;

Fig. 3 schematically illustrates a generic IFT shadow logic for a combinational macro-cell; and

Fig. 4 schematically illustrates IFT shadow logic for an adder cell and a subtractor cell.

**Detailed description of drawings**

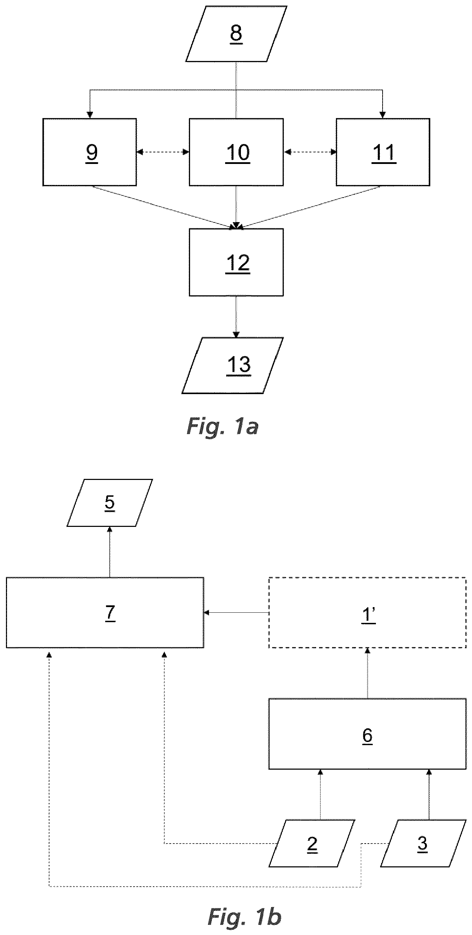

**Fig. 1a** shows a schematic flow chart of the method according to the first aspect of the invention. A combinational macro-cell is received as input 8. Based on said received combinational macro-cell, at least one replica of the received combinational macro-cell is constructed 9, an input logic is constructed 10, and an additional logic is constructed 11. Dashed double arrows in **Fig. 1a** are shown to illustrate that the at least one replica, the input logic and the additional logic may not be constructed 9, 10, 11 independently of one another (there may need to be at least shared information in the three construction steps), as an output of the input logic is configured to be provided as input to the at least one replica, for example, and an output of the at least one replica is configured to be provided as input to the additional logic, for example. IFT shadow logic for the received combinational macro-cell can then be assembled 12 from the constructed 9, 10, 11 at least one replica, input logic and additional logic by suitably connecting inputs and outputs of these components, e.g., using wires. The method according to the first aspect of the invention provides as output 13 a constructed IFT shadow logic for a combinational macro-cell.

**Fig. 1b** schematically illustrates a representation of a constructed IFT shadow logic using the method according to the first aspect of the invention. The IFT shadow logic 1',6,7 comprises at least one replica 1' of a combinational macro-cell for which the IFT shadow logic is constructed, an input logic 6 and an additional logic 7. The input logic 6 is configured to receive as input $N_i$ input bits $I$ 2 (which the combinational macro-cell is also configured to receive as input) and corresponding $N_i$ taint input bits $I^t$ 3 (which the combinational macro-cell is not configured to receive), wherein each bit in the taint input bits 3 denotes whether the corresponding bit in the input bits 2 is tainted. The input logic 6 is configured to provide input to the at least one replica 1' of the combinational macro-cell. The output of the at least one replica 1' is in turn configured to be provided to the additional logic 7. The additional logic 7 furthermore may, depending on the type of combinational macro-cell under discussion, further receive as input the input bits $I$ 2 and/or the taint input bits $I^t$ 3. The additional logic 7 is configured to provide taint output bits 5 corresponding to output bits which the combinational macro-cell is configured to provide.

A combinational macro-cell C may operate on $N_i$ input bits $(I_j)_{0 \leq j < N_i}$ and provide as output $N_o$ output bits $C(I)$: $= (Y_j)_{0 \leq j < N_o}$. Taint input bits and taint output bits may be correspondingly defined. $I_j^t = 1$ then indicates that input bit $I_j$ is tainted (similar statements hold for the output bits). The IFT shadow logic (which is configured to determine taint output bits) corresponding to the combinational macro-cell C may be denoted as $C^t$. Assume that a value assignment to the $N_i$ input bits is given (there are in total $2^{N_i}$ possible value assignments) as well as corresponding taint input bits (also with assigned values - this fixes the tainted input bits in the input bits). Information may be considered to propagate from those input bits (the tainted input bits), whose corresponding taint input bits are equal to one, to some output bit $Y_j$ (whose corresponding taint output bit $Y_j^t$ is then equal to one) if there exist input bits $\tilde{I}$ differing from $I$ only on tainted input bits which cause distinct values for $Y_j$ (after processing by the combinational macro-cell C):

$$C^t(I, I^t)_j = 1 \Leftrightarrow \exists \tilde{I} \; s.t. \, (I \oplus \tilde{I}) \wedge \overline{I^t} = 0 \; and \; C(\tilde{I}, I^t)_j = \overline{C(I, I^t)_j}.$$

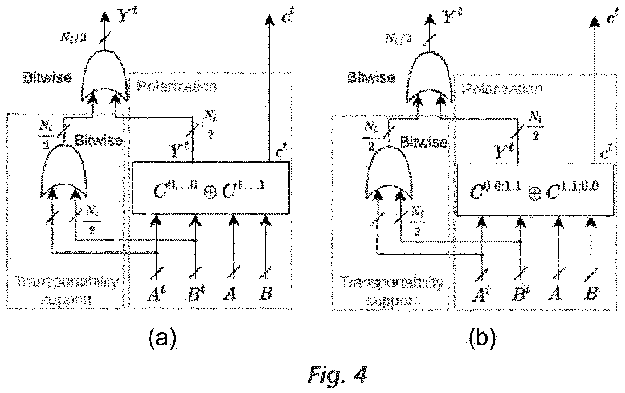

In the preceding equation, $\Leftrightarrow$ denotes logical equivalence, $\exists$ denotes the existential quantification symbol, $\oplus$ denotes a bitwise exclusive-or symbol, $\bar{\cdot}$ denotes bitwise inversion of its argument, and $\wedge$ is a symbol indicating a bitwise logical and-operation (the bitwise logical or-operation is denoted by symbol v). Based on the preceding equation, the IFT shadow logic $C^t$ is constructed. A generic approach, working for any combinational macro-cell, for constructing the IFT shadow logic based on the preceding equation is discussed in the description of **Fig. 3**. A specific approach for constructing the IFT shadow logic for specific combinational macro-cells is discussed in the description of **Fig. 4** for an adder cell and for a subtractor cell.

**Fig. 2** schematically illustrates construction principles used for instrumenting a hardware design with IFT shadow logic. The hardware design under consideration comprises a digital circuit, and any digital circuit can be represented as an interconnection of state-holding (macro-)cells (e.g., flip-flops and latches, or SRAM) and purely combinational (stateless) (macro-)cells. Wiring between state-holding (macro-)cells and combinational (macro-)cells defines circuit behaviour. Instrumenting refers to adding logic to the digital circuit to enable taint propagation through the digital circuit: for a sub-operation performed by the digital circuit, for example, instrumenting refers to adding logic to the digital circuit to compute taint relations between an input and an output of the sub-operation.

Depending on the abstraction level at which the digital circuit is studied, the term combinational (macro-)cell may refer to different concepts. For the current discussion, the following abstraction levels may be considered: gate level and register-transfer level. At the gate level, the digital circuit may be described using state-holding cells and typically low-level logic functions (also termed combinational cells or logical gates) such as AND, OR, etc. The type of cells (both state-holding and combinational) used in a gate-level description of the digital circuit may be dependent on a specific standard cell library designed for a specific semiconductor manufacturing process. At the gate level, the digital circuit may be represented by a gate netlist. The mapping of Boolean equations onto a gate netlist in which standard cells are used is generally known under the name technology mapping. Furthermore, control path and datapath are not distinguishable at the gate level (in contrast to higher levels of abstraction). At the register-transfer level, combinational cells of greater complexity may be used as compared to combinational cells on the gate level (state-holding cells of greater complexity can be used as well at the register-transfer level compared to the gate level). These higher-complexity combinational cells on the register-transfer level may be termed combinational macro-cells (higher-complexity state-holding cells on the register-transfer level may be termed state-holding macro-cells). At the register-transfer level, typically control path and datapath can still be distinguished. The control path may, for example, be described using a finite-state machine, and the datapath may comprise macro-cells (e.g., adder macro-cells or multiplier macro-cells, memory macro-cells, shift register macro-cells, counter macro-cells, etc.). At an intermediate level of abstraction in-between the register-transfer level and gate level (this intermediate level may be considered to be part of the register-transfer level), control path and datapath may be fused, and the digital circuit may be represented using a register-transfer level netlist comprising state-holding macro-cells (e.g., static random-access memory (SRAM)) and combinational macro-cells. At this intermediate level of abstraction, differences between explicit flow of information and implicit flow of information disappears, and only explicit flow of information remains. According to the method according to the first aspect of the present invention, IFT shadow logic may be constructed for combinational macro-cells on both register-transfer level representations of the digital circuit, i.e., for the (slightly) higher-level representation involving a still separate control path and datapath and for the (slightly) lower-level representation involving a fused control path and datapath in the form of a register-transfer level netlist.

The combinational macro-cells for which the method according to the first aspect may be used for constructing IFT shadow logic therefore differ from gate-level combinational cells, gate-level combinational cells often being embodied in the form of combinational cells found in a standard cell library, in that they have greater internal complexity. Combinational macro-cells (respectively macro-cells in general, e.g., also including memory macro-cells) on the register-transfer level, however, also typically possess a great degree of regularity and can therefore typically be described using few parameters. An adder macro-cell can, for example, be described using its bit width, and a memory macro-cell on the register-transfer level can, for example, be described using its word length and the number of words which can be stored in said memory macro-cell. An adder macro-cell on the register-transfer level can, for example, be assembled using single-bit full adders, and a memory macro-cell on the register-transfer level can, for example, be assembled using single-bit memory.

In **Fig. 2a**, it is schematically shown how state-holding (macro-)cells can be treated while constructing IFT shadow logic for a whole hardware design (including both stateless and state-holding components). Since a signal entering a state-holding (macro-)cell is delayed, the taint information corresponding to said signal need to be delayed as well: for every state-holding (macro-)cell, an additional shadow (macro-)cell (indicated by dashed lines) may therefore be constructed which stores taint information for the corresponding state-holding (macro-)cell. An instrumented whole hardware design may therefore comprise, for each state-holding (macro-)cell, an additional shadow state-holding (macro-)cell. In **Fig. 2b**, it is schematically shown how combinational macro-cells can be treated while constructing IFT shadow logic for a whole hardware design. Besides the processing path through the combinational macro-cell, a further processing path is added to the hardware design for taint propagation. The elements added to the further processing path are indicated by dashed lines in **Fig. 2b.**

**Fig. 3** schematically illustrates a generic IFT shadow logic for a combinational macro-cell. As stated before in the description of **Fig. 1**, a general relationship which can be used for constructing IFT shadow logic can be based on the following expression:

$$C^t(I, I^t)_j = 1 \Leftrightarrow \exists \tilde{I} \ s.t. (I \oplus \tilde{I}) \wedge \overline{I^t} = 0 \ and \ C(\tilde{I}, I^t)_j = \overline{\overline{C(I, I^t)_j}}.$$

The construction of IFT shadow logic can then proceed as follows for a generic combinational macro-cell: for a given $I$ and $I^t$, all $\tilde{I}$ which differ from $I$ only on tainted input bits (i.e., on $I^t$) can be constructed. To determine such $\tilde{I}$, all $2^{N_i}$ possible value assignments to input bits comprising $N_i$ elements can be used and filtered with the taint input bits $I^t$. Possible value assignments can be represented by variable $v$ in unsigned binary representation (for $N_i = 2$, for example, $v$ can have values [0,0], [0,1], [1,0] and [1,1]), and construction of possible $\tilde{I}$ input bits can be carried out using multiplexer logic elements 6': $(I \wedge \overline{I^t}) \vee (v \wedge I^t)$. In this equation, $I^t$ has the role of selector in multiplexers between $I$ and $v$. Since there are

$2^{N_i}$ different value assignments to $v$, there are $2^{N_i}$ different multiplexer logic elements 6' in this construction scheme for a generic IFT shadow logic. To shorten notation, $C^v := c^v(I, I^t) := C\,((I \wedge \overline{I^t}) \vee (v \wedge I^t))$ can be defined, and $2^{N_i}$ different instances of $C^v$ are used in the generic IFT shadow logic, i.e., $2^{N_i}$ replicas of combinational macro-cell C. An output bit $Y_j$ is tainted if $\tilde{I}$ exists which causes a different value for $Y_j$ than $I$. For each $j$, pairwise exclusive-or-comparisons between the $2^{N_i}$ bits $C^v(I, I^t)_j$ can then be carried out using $\binom{2^{N_i}}{2}$ XOR logical gates 7', with $\binom{2^{N_i}}{2}$ being the binomial coefficient

$\dfrac{(2^{N_i})!}{2(2^{N_i}-2)!}$, and with ! referring to the factorial operation. If C has $N_o$ output bits, there are $N_o \binom{2^{N_i}}{2}$ XOR logical gates 7' in total to carry out pairwise bitwise exclusive-or-comparisons between all output bits of the $2^{N_i}$ replicas of the combinational macro-cell. Since it is sufficient that only one $\tilde{I}$ exists which causes a change in output bit $Y_j$, for each $j$ the outputs of the $\binom{2^{N_i}}{2}$ XOR logical gates 7' can be condensed using an OR logical gate 7" performing an or-comparison between $\binom{2^{N_i}}{2}$ inputs and providing one taint output bit: in total, there are therefore $N_o$ OR logical gates 7" providing the $N_o$ taint output bits 5.

In **Fig. 3**, the output of the generic IFT shadow logic construction mechanism described above is shown for a combinational macro-cell with two input bits and three output bits. For clarity reasons the wiring between the four replicas 1' of the combinational macro-cell and the XOR logical gates 7' is not shown for the highest order output bit. The input logic 6 comprises four multiplexer logic elements 6', and the additional logic 7 comprises eighteen XOR logical gates 7' and three OR logical gates 7".

**Fig. 4** schematically illustrates IFT shadow logic for an adder macro-cell and a subtractor macro-cell. The generic IFT shadow logic constructed as described in the description of **Fig. 3** may be rather large, in particular for large $N_i$. **Fig. 4** schematically depicts more compact IFT shadow logic for an adder macro-cell (**Fig. 4a**) and a subtractor macro-cell (**Fig. 4b**). The depicted IFT shadow logic works for any kind of adder macro-cell and subtractor macro-cell, i.e., their internal implementation is not important. The first $N_i/2$ input bits correspond to a first variable $A$ in the respective addition/subtraction operation, and the remaining $N_i/2$ input bits correspond to a second variable $B$ in the respective addition/subtraction operation. The input logic in both cases comprises two multiplexer logic elements. For the adder macro-cell, the multiplexer logic elements are given as $\left(I \wedge \overline{I^t}\right) \vee \left(\underbrace{0 \dots 0}_{N_i-times} \wedge\, I^t\right)$ and as

$\left(I \wedge \overline{I^t}\right) \vee \left(\underbrace{1 \dots 1}_{N_i-times} \wedge\, I^t\right)$, and for the subtractor macro-cell, the multiplexer logic elements are given as $(I \wedge \overline{I^t})$ $\vee\, (0 \dots 0 1 \dots 1 \wedge I^t)$ and as $(I \wedge \overline{I^t}) \vee (1 \dots 1 0 \dots 0 \wedge I^t)$, with the switching between zeros and ones occurring after $N_i/2$ bits.

Using more concise notation, the processed output of a first replica of the adder macro-cell may be denoted as $C^{N_i-times}_{\overbrace{0\dots0}}$

, and the processed output of a second replica of the adder macro-cell may be denoted as $C^{N_i-times}_{\overbrace{1\dots1}}$. Similar shortened notations exist for the subtractor macro-cell and are shown in **Fig. 4b**. Since the IFT shadow logic shown in **Fig. 4** uses only polar assignments of values for $v$ (i.e., the values corresponding to $A$ and $B$ are either all zero or one), the resulting part of the IFT shadow logic - as shown in **Fig. 4** - may be termed polarization part (similar polarization relationships can be also described for bitwise monotonic macro-cells and for negation macro-cells, for example). $c^t$ are the taint output bits corresponding to the carry bits used by the adder macro-cell/the subtractor macro-cell. The additional logic comprises for both adder macro-cell and subtractor macro-cell an XOR logical gates and two OR logical gates, a first of which is configured to perform bitwise or-operations between corresponding bits in the taint input bits corresponding to inputs $A$ and $B$ (this part is termed transportability support in **Fig. 4**), and a second of which is used to perform further bitwise or-operations between the outputs of the first OR logical gate and the XOR logical gate. Summarising the compact IFT shadow logic shown in **Fig. 4a** for an adder macro-cell, the taint output bits $Y^t$ can be obtained as follows:

$$Y^t = [C^{0...0} \oplus C^{1...1}] \vee A^t \vee B^t,$$

and the compact IFT shadow logic shown in **Fig. 4b** for a subtractor macro-cell can be represented as follows:

$$Y^t = [C^{0...01...1} \oplus C^{1...10...0}] \vee A^t \vee B^t.$$

**Claims**

1. Method for constructing an Information Flow Tracking (IFT) shadow logic $C^t$ (1',6,7) for a combinational macro-cell C (1) on a register-transfer level, wherein the combinational macro-cell C (1) is configured to receive as input a set of input bits $I$ (2) comprising $N_i$ elements, to which $N_i$ input bits $I$ (2) correspond $N_i$ taint input bits $I^t$ (3), and to provide as output a set of output bits $C(I)$ (4) comprising $N_o$ elements, wherein the IFT shadow logic (1',6,7) is configured to map the set of input bits (2) and the corresponding set of taint input bits (3) onto a set of $N_o$ taint output bits (5) corresponding to the $N_o$ output bits (4), and wherein the constructing of the IFT shadow logic (1',6,7) comprises as steps:

   (a) constructing (9) at least one replica (1') of the combinational macro-cell C (1);
   (b) constructing (10) an input logic (6), wherein the input logic (6) is configured to provide input to the at least one replica (1') of the combinational macro-cell C (1), and wherein the input logic (6) is configured to receive as input the $N_i$ input bits $I$ (2) and the $N_i$ taint input bits $I^t$ (3); and
   (c) constructing (11) an additional logic (7) configured to at least receive input from the at least one replica (1') of the combination macro-cell C (1), wherein the additional logic (7) is configured to provide the $N_o$ taint output bits (5) corresponding to the $N_o$ output bits (4) of the combinational macro-cell C (1),

   and wherein the constructed IFT shadow logic $C^t$ (1',6,7) comprises the input logic (6), the at least one replica (1') of the combinational macro-cell C (1), and the additional logic (7).

2. Method according to claim 1, wherein $2^{N_i}$ replicas (1') of the combinational macro-cell C (1) are constructed, and wherein the constructed input logic (6) comprises $2^{N_i}$ multiplexer logic elements (6') of the form $(I \wedge \overline{I^t}) \vee (v \wedge I^t)$, with v having $N_i$ elements and being in binary representation, wherein each multiplexer logic element (6') corresponds to a value assignment to $v$, and wherein the $2^{N_i}$ multiplexer logic elements (6') are configured to provide input to the $2^{N_i}$ replicas (1') of the combinational macro-cell C (1) in a bijective manner, with each of the $2^{N_i}$ multiplexer logic elements (6') being configured to provide an input to one corresponding replica (1') of the combinational macro-cell C (1) and with each of the $2^{N_i}$ replicas (1') of the combinational macro-cell C (1) being configured to receive an input from one corresponding multiplexer logic element (6'), and wherein the constructed additional logic (7) comprises $N_o \binom{2^{N_i}}{2}$ exclusive-or (XOR) logical gates (7') and $N_o$ or (OR) logical gates (7"), wherein each output bit position of an output bit in the output bits $C(I)$ (4) of the combinational macro-cell C (1) is replicated $2^{N_i}$ times in the $2^{N_i}$ replicas (1') of the combinational macro-cell C (1), an wherein for each of the $N_o$ output bit positions, $\binom{2^{N_i}}{2}$ XOR logical gates (7') are configured to carry out all possible bitwise XOR-operations between the $2^{N_i}$ bits at the respective output bit position, and wherein for each output bit position, an OR logical gate (7") is configured to carry out an OR-operation between the $\binom{2^{N_i}}{2}$ outputs of the XOR logical gates (7') corresponding to respective output bit position, and wherein the $N_o$ OR logical gates (7") are configured to provide the $N_o$ taint output bits (5).

3. Method according to claim 1, wherein the combinational macro-cell C (1) is embodied as a monotonic macro-cell, wherein two replicas (1') of the combinational macro-cell C (1) are constructed, and wherein the constructed input logic (6) comprises two multiplexer logic elements (6'), wherein a first of the two multiplexer logic elements (6') is embodied as $(I \wedge \overline{I^t}) \vee (d_{N_{i-1}} ... d_0 \wedge I^t)$ and is configured to provide an input to a first of the two replicas (1') of the combinational macro-cell C (1), with $d_i := 1$ if the combinational macro-cell C (1) is non-decreasing in input bit i or $d_i := 0$ if the combinational macro-cell C (1) is non-increasing in input bit i, and wherein a second of the two multiplexer logic elements (6') is embodied as $(I \wedge \overline{I^t}) \vee (\overline{d_{N_{i-1}} ... d_0} \wedge I^t)$ and is configured to provide an input to a second of the two replicas (1') of the combinational macro-cell C (1), and wherein the constructed additional logic (7) comprises an XOR logical gate (7') configured to provide the $N_o$ taint output bits (5), wherein the XOR logical gate (7') is configured to carry out bitwise XOR-operations between corresponding elements in the outputs of the two replicas (1') of the combinational macro-cell C (1).

4. Method according to claim 1, wherein the combinational macro-cell C (1) is embodied as an adder macro-cell, wherein the $N_i$ input bits $I$ (2) comprise two inputs $A$ (2') and $B$ (2") each of width $N_i/2$ and wherein the $N_i$ taint input bits $I^t$ (3) comprise two inputs $A^t$ (3') and $B^t$ (3") each of width $N_i/2$, and wherein two replicas (1') of the combinational macro-cell C (1) are constructed, and wherein the constructed input logic (6) comprises two multiplexer logic elements (6'), wherein a first of the two multiplexer logic elements (6') is embodied as

$$\left(I \wedge \overline{I^t}\right) \vee \left(\underbrace{0...0}_{N_i-times} \wedge I^t\right),$$

with the first $N_i/2$ zeros corresponding to input $A$ (2') and the remaining $N_i/2$ zeros corresponding to input $B$ (2"), and with the output of the first multiplexer logic element configured to provide an input to a first of the two replicas (1') of the adder macro-cell C (1), and wherein a second of the two multiplexer logic elements (6') is embodied as

$$\left(I \wedge \overline{I^t}\right) \vee \left(\underbrace{1...1}_{N_i-times} \wedge I^t\right),$$

with the first $N_i/2$ ones corresponding to input $A$ (2') and the remaining $N_i/2$ ones corresponding to input $B$ (2"), and with the output of the second multiplexer logic element configured to provide an input to a second of the two replicas (1') of the adder macro-cell C (1), and wherein the constructed additional logic (7) comprises an XOR logical gate (7') and two OR logical gates (7"), wherein the XOR logical gate (7') is configured to carry out bitwise XOR-operations between corresponding elements in the outputs of the two replicas (1') of the adder macro-cell C (1), and wherein a first OR logical gate of the two OR logical gates (7") is configured to carry out bitwise OR-operations between corresponding elements of $A^t$ (3') and $B^t$ (3"), and wherein a second OR logical gate of the two OR logical gates (7") is configured to carry out bitwise OR-operations between corresponding elements of the output of the XOR logical gate (7') and the output of the first OR logical gate, wherein the second OR logical gate is configured to provide $N_i/2$ taint output bits (5).

5. Method according to claim 1, wherein the combinational macro-cell C (1) is embodied as a subtractor macro-cell, wherein the $N_i$ input bits $I$ (2) comprise two inputs $A$ (2') and $B$ (2") each of width $N_i/2$ and wherein the $N_i$ taint input bits $I^t$ (3) comprise two inputs $A^t$ (3') and $B^t$ (3") each of width $N_i/2$, and wherein two replicas (1') of the combinational macro-cell C (1) are constructed, and wherein the constructed input logic (6) comprises two multiplexer logic elements (6'), wherein a first of the two multiplexer logic elements (6') is embodied as

$$\left(I \wedge \overline{I^t}\right) \vee (0...01...1 \wedge I^t)$$

with the first $N_i/2$ zeros corresponding to input $A$ (2') and the remaining $N_i/2$ ones corresponding to input $B$ (2"), and with the output of the first multiplexer logic element configured to provide an input to a first of the two replicas (1') of the subtractor macro-cell C (1), and wherein a second of the two multiplexer logic elements (6') is embodied as

$$\left(I \wedge \overline{I^t}\right) \vee (1...10...0 \wedge I^t)$$

with the first $N_i/2$ ones corresponding to input $A$ (2') and the remaining $N_t/2$ zeros corresponding to input $B$ (2"), and with the output of the second multiplexer logic element configured to provide an input to a second of the two replicas (1') of the subtractor macro-cell C (1), and wherein the constructed additional logic (7) comprises an XOR logical gate (7') and two OR logical gates (7"), wherein the XOR logical gate (7') is configured to carry out bitwise XOR-operations between corresponding elements in the outputs of the two replicas (1') of the subtractor macro-cell C (1), and wherein a first OR logical gate of the two OR logical gates (7") is configured to carry out bitwise OR-operations between corresponding elements of $A^t$ (3') and $B^t$ (3"), and wherein a second OR logical gate of the two OR logical gates (7") is configured to carry out bitwise OR-operations between corresponding elements of the output of the XOR logical gate (7') and the output of the first OR logical gate, wherein the second OR logical gate is configured to provide $N_i/2$ taint output bits (5).

6. Method according to claim 4 or 5, wherein the XOR logical gate (7') is configured to provide taint output bits (5) for carry bits.

7. Method according to claim 1, wherein the combinational macro-cell C (1) is embodied as a negation macro-cell, and wherein two replicas (1') of the combinational macro-cell C (1) are constructed, and wherein the constructed input logic (6) comprises two multiplexer logic elements (6'), wherein a first of the two multiplexer logic elements (6') is embodied as

$$\left( I \wedge \overline{I^t} \right) \vee \left( \underbrace{0 \dots 0}_{N_i - times} \wedge I^t \right),$$

with the output of the first multiplexer logic element configured to provide an input to a first of the two replicas (1') of the negation macro-cell C (1), and wherein a second of the two multiplexer logic elements (6') is embodied as

$$\left( I \wedge \overline{I^t} \right) \vee \left( \underbrace{1 \dots 1}_{N_i - times} \wedge I^t \right),$$

with the output of the second multiplexer logic element configured to provide an input to a second of the two replicas (1') of the negation macro-cell C (1), and wherein the constructed additional logic (7) comprises an XOR logical gate (7') and an OR logical gate (7"), wherein the XOR logical gate (7') is configured to carry out bitwise XOR-operations between corresponding elements in the outputs of the two replicas (1') of the negation macro-cell C (1), and wherein the OR logical gate (7") is configured to carry out bitwise OR-operations between corresponding elements of the output of the XOR logical gate (7') and the taint input bits $I^t$ (3), wherein the OR logical gate (7") is configured to provide the taint output bits (5).

8. Method according to claim 1, wherein the combinational macro-cell C (1) is embodied as an (in)equality macro-cell, wherein the $N_i$ input bits $I$ (2) comprise two inputs $A$ and $B$ each of width $N_i/2$ and wherein the $N_i$ taint input bits $I^t$ (3) comprise two inputs $A^t$ and $B^t$ each of width $N_i/2$, and wherein one replica (1') of the combinational macro-cell C (1) is constructed, and wherein the constructed input logic (6) is configured to determine $A \wedge \overline{A^t \vee B^t}$ and $B \wedge \overline{A^t} \vee B^t$ as input to the one replica (1') of the (in)equality macro-cell C (1), and wherein the constructed additional logic (7) comprises an AND logical gate and a term $\vee I^t$, which term is one if an only if any of the input bits is tainted, wherein the AND logical gate is configured to carry out an AND-operation between the output of the one replica (1') of the (in)equality macro-cell C (1) and the term $\vee I^t$, wherein the AND logical gate is configured to provide one taint output bit (5).

9. Method according to claim 1, wherein the combinational macro-cell C (1) is embodied as a logical unsigned-offset shift macro-cell, wherein the $N_i$ input bits $I$ (2) comprise two inputs $A$ and $B$ of width $N_A$ and $N_B$, respectively, and wherein the $N_i$ taint input bits $I^t$ (3) comprise two inputs $A^t$ and $B^t$ of width $N_A$ and $N_B$, respectively, and wherein one replica (1') of the combinational macro-cell C (1) is constructed, and wherein the constructed input logic (6) is configured to determine $B \wedge \overline{B^t}$ and to provide $A^t$ and $B \wedge \overline{B^t}$ as input to the one replica (1') of the logical unsigned-offset shift macro-cell C (1) which one replica (1') is configured to evaluate $C(A^t, B \wedge \overline{B^t})$ and to provide $A'$ as output, and wherein the constructed additional logic (7) is embodied as follows

$$Y_j^t = \bigvee_{k=0}^{2^{N_B}-1} \left( [B =_t k] \wedge [A'_j \neq_t A'_{j+k}] \right),$$

with $k$ being in unsigned binary representation in term $[B =_t k]$, with $=_t$ denoting that two vectors match on non-tainted bits and $A'_j \neq_t A'_{j+k}$ corresponding to $\left( A'_j \oplus A'_{j+k} \right) \vee \left( A'^t_j \vee A'^t_{j+k} \right)$, and with $A'$ being completed with zeros beyond its most significant bit, and with $Y_j^t$ being the taint output bit (5) corresponding to the j-th output bit which the logical unsigned-offset shift macro-cell C (1) is configured to provide.

10. Method according to claim 1, wherein the combinational macro-cell C (1) is embodied as an arithmetical unsigned-offset shift macro-cell, wherein the $N_i$ input bits $I$ (2) comprise two inputs $A$ and $B$ of width $N_A$ and $N_B$, respectively, and wherein the $N_i$ taint input bits $I^t$ (3) comprise two inputs $A^t$ and $B^t$ of width $N_A$ and $N_B$, respectively, and wherein one replica (1') of the combinational macro-cell C (1) is constructed, and wherein the constructed input logic (6) is configured to determine $B \wedge \overline{B^t}$ and to provide $A^t$ and $B \wedge \overline{B^t}$ as input to the one replica (1') of the arithmetical unsigned-offset shift macro-cell C (1) which one replica (1') is configured to evaluate $C(A^t, B \wedge \overline{B^t})$ and to provide $A'$ as output, and wherein the constructed additional logic (7) is embodied as follows

$$Y_j^t = \bigvee_{k=0}^{2^{N_B}-1} \left( [B =_t k] \wedge [A'_j \neq_t A'_{\min (j+k, N_A-1)}] \right),$$

with $k$ being in unsigned binary representation in term $[B =_t k]$, with $=_t$ denoting that two vectors match on non-tainted bits and $A'_j \neq_t A'_{\min (j+k, N_A-1)}$ corresponding to $\left( A'_j \oplus A'_{\min (j+k, N_A-1)} \right) \vee \left( A'^t_j \vee A'^t_{\min (j+k, N_A-1)} \right)$, with $\min (\cdot, \cdot)$ determining a smaller argument of its two arguments, and with $Y_j^t$ being the taint output bit (5) corresponding to the $j$-th output bit which the arithmetical unsigned-offset shift macro-cell C (1) is configured to provide.

11. Information Flow Tracking (IFT) shadow logic $C^t$ (1',6,7) corresponding to a combinational macro-cell C (1) on a register-transfer level, wherein the IFT shadow logic (1',6,7) is constructed using a method according to any one of claims 1 to 10.

12. Method for instrumenting a hardware design on a register-transfer level with IFT shadow logic (1',6,7), wherein the hardware design comprises at least one combinational macro-cell (1), wherein the method comprises constructing an IFT shadow logic (1',6,7) for each combinational macro-cell of the at least one combinational macro-cell (1) using the method according to any one of claims 1 to 10 and instrumenting the respective combinational macro-cell with the constructed IFT shadow logic (1',6,7).

13. Method according to claim 12, wherein the hardware design corresponds to a general-purpose central processing unit, and/or wherein the hardware design corresponds to a system on a chip (SoC).

14. Computer program product comprising instructions which when executed by a computer, cause the computer to carry out a method according to claims 12 or 13.

15. Method for testing a hardware design on a register-transfer level, wherein the hardware design comprises at least one combinational macro-cell (1) and a memory model, and which hardware design is instrumented with IFT shadow logic (1',6,7) using the method according to claims 12 or 13, wherein the testing comprises as steps:

(a) tainting at least one bit in the memory model, which at least one bit corresponds to program code or data stored in the memory model;

(b) simulating execution of the instrumented hardware design using a register-transfer level simulator; and

(c) testing the hardware design based on a propagation of taint, with taint propagating from the tainted at least one bit in the memory model to further components of the hardware design during the simulated execution.

Fig. 1a

Fig. 1b

Fig. 2

Fig. 3

Fig. 4

Europäisches
Patentamt

European
Patent Office

Office européen
des brevets

# EUROPEAN SEARCH REPORT

**Application Number**

EP 22 15 5758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ELNAGGAR RANA ET AL: "Securing IJTAG against data-integrity attacks", 2018 IEEE 36TH VLSI TEST SYMPOSIUM (VTS), IEEE, 22 April 2018 (2018-04-22), pages 1-6, XP033352019, DOI: 10.1109/VTS.2018.8368642 [retrieved on 2018-05-29] | 1,11,12, 14,15 | INV. G06F21/71 G06F11/22 G06F30/33 G06F21/55 |
| A | * "V Information Flow Tracking"* ----- | 2-10,13 | |
| A | ARMAITI ARDESHIRICHAM ET AL: "Register transfer level information flow tracking for provably secure hardware design", DESIGN, AUTOMATION & TEST IN EUROPE, EUROPEAN DESIGN AND AUTOMATION ASSOCIATION, IMEC VZW, KAPELDREEF 75LEUVENBELGIUM, 27 March 2017 (2017-03-27), pages 1695-1700, XP058372422, * page 1696 - page 1698 * ----- | 1-15 | |

**TECHNICAL FIELDS SEARCHED (IPC)**

G06F

The present search report has been drawn up for all claims

| Place of search | Date of completion of the search | Examiner |
|---|---|---|
| Munich | 19 July 2022 | Chabot, Pedro |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DENNING, DOROTHY E. ; PETER J. DENNING.** Certification of programs for secure information flow. *Communications of the ACM,* 1977, vol. 20.7, 504-513
- **TIWARI, MOHIT et al.** Complete information flow tracking from the gates up. *Proceedings of the 14th international conference on architectural support for programming languages and operating systems,* 2009

- Register transfer level information flow tracking for provably secure hardware design. **ARDESHIRI-CHAM, ARMAITI et al.** Design, Automation & Test in Europe Conference & Exhibition (DATE), 2017. IEEE, 2017